# EUROPÄISCHE PATENTANMELDUNG

(11) **EP 4 001 483 A1**
(43) Veröffentlichungstag der Anmeldung: **25.05.2022**
(21) Anmeldenummer: 20000415.8
(22) Anmeldetag: 17.11.2020
(51) Int. Cl.: D04B 1/04

(54) **EDELMETALLNETZ FÜR DIE KATALYSIERUNG VON GASPHASENREAKTIONEN, SEIN HERSTELLUNGSVERFAHREN UND SEINE VERWENDUNG IN EINEM AMMONIAK OXIDATIONSVERFAHREN**

(71) Anmelder: UMICORE AG & Co. KG, 63457 Hanau-Wolfgang (DE)
(72) Erfinder: Born, Dirk, 63505 Langenselbold (DE); Prasch, Dieter, 36396 Steinau (DE); Votsmeier, Martin, 69469 Weinheim (DE); Wiser, Artur, 60486 Frankfurt (DE)
(74) Vertreter: Clauswitz, Kai-Uwe Wolfram

(57) **Zusammenfassung**

Die Erfindung betrifft ein Verfahren zur Herstellung von Edelmetallnetzen auf Flachstrickmaschinen, die Schritte enthaltend
• Bereitstellen von Edelmetalldraht, Platin umfassend
• Bereitstellen von brennbarem oder in Lösungsmittel löslichem Garn
• Stricken von Zweibettware durch simultanes Stricken auf dem vorderen und hinteren Nadelbett und Zusammenführung der beiden Gestricke durch verbindende Polfäden
wobei auf dem vorderen oder auf dem hinteren Nadelbett ein brennbares oder lösliches Garn verwendet wird, welches nach dem Strickvorgang abgeflammt oder aufgelöst wird, und auf dem anderen Nadelbett und für die Polfäden ein Edelmetalldraht verwendet wird, so dass nach dem Abflammen oder Auflösen des brennbaren oder löslichen Garns nur die Polfäden und das auf dem hinteren oder vorderen Nadelbett hergestellte Gestrick aus Edelmetalldraht übrig bleiben.

## Beschreibung

Die Erfindung betrifft gestrickte Edelmetallnetze mit neuer Strickstruktur für die katalytische Oxidation von Ammoniak, insbesondere für die Oxidation zu NO, wie sie für die Salpetersäureproduktion verwendet wird.

Edelmetallkatalysierte Gasreaktionen wie die Oxidation von Ammoniak mit Luftsauerstoff in der Salpetersäureproduktion (Ostwald-Verfahren) oder die Umsetzung von Ammoniak mit Methan in Anwesenheit von Sauerstoff zu Blausäure (Andrussow-Verfahren) haben seit langem erhebliche industrielle Bedeutung erlangt, werden durch sie doch im großtechnischen Maßstab Basischemikalien für die chemische Industrie und für die Düngemittelproduktion bereitgestellt (Andreas Jess, Peter Wasserscheid: Chemical Technology; Wiley-VCH Verlag, Weinheim 2013, Kapitel 6.4.)

Kern dieser heterogen katalysierten Gasreaktionen sind Edelmetallkatalysatoren in Form gasdurchlässiger räumlicher Gebilde, an bzw. in denen die Reaktion abläuft. Hierbei haben sich seit geraumer Zeit Netze in Form von Geweben (DE4028916 C2) oder Gestricken (EP0364153 B1, DE4206199 C1) aus feinen Edelmetalldrähten durchgesetzt.

Die Katalysatornetze werden dabei üblicherweise in einem Strömungsreaktor in einer Ebene senkrecht zur Strömungsrichtung des Gasgemisches angeordnet. Auch kegelförmige Anordnungen sind bekannt. Es werden zweckmäßigerweise mehrere Netze hintereinander angeordnet und zu einem Netzstapel zusammengefasst.

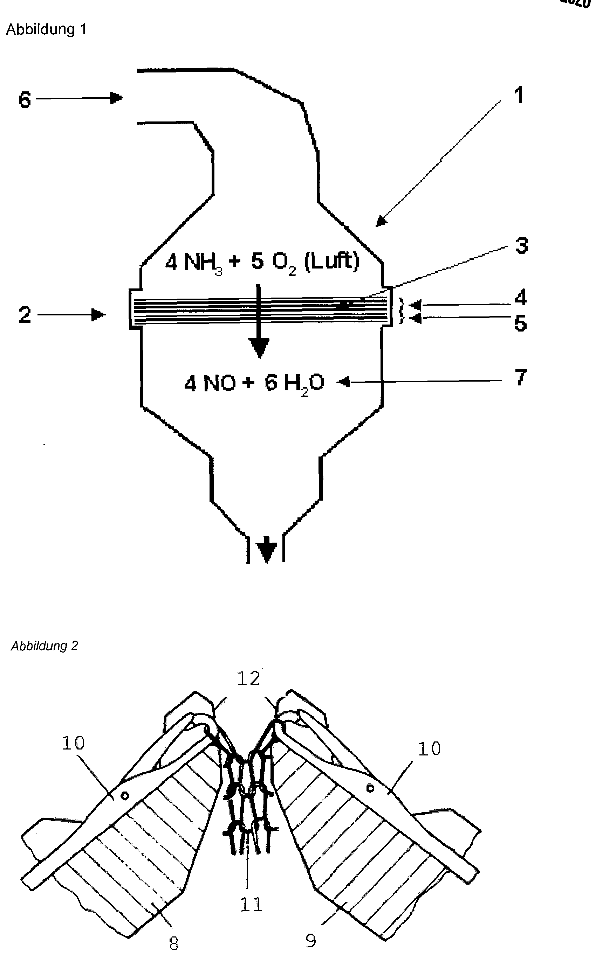

Abbildung 1 zeigt am Beispiel der katalytischen Ammoniakoxidation (Ostwald-Verfahren) schematisch den Reaktor mit dem darin verbauten Netzstapel, dessen Funktion im Folgenden beschrieben wird:
In der Reaktionszone (2) des Strömungsreaktors (1) ist in einer Ebene senkrecht zur Strömungsrichtung der Netzstapel (3), der aus mehreren hintereinander liegenden Katalysatornetzen (4) und nachgeschalteten Trenn- und Getternetzen (5) besteht, angeordnet. Dieser Netzstapel wird durch Einklemmen in seiner Position gehalten.

Das Reaktionsgas (Ammoniak-Luftsauerstoffgemisch mit einem Ammoniakgehalt von 9 - 13 Vol.-%) (6) durchströmt unter atmosphärischem oder erhöhtem Druck den Netzstapel (3), wobei im Eintrittsbereich die Zündung des Gasgemisches erfolgt und die Verbrennungsreaktion zu Stickstoffmonoxid (NO) und Wasser die gesamte Reaktionszone (2) erfasst:

4 NH₃ + 5 O₂ (Luft) → 4 NO + 6 H₂O

Unerwünschte Nebenreaktionen sind die Oxidation des Ammoniaks zu Stickstoff und Lachgas (N₂O), wobei ersteres lediglich die Ausbeute an NO verringert, letzteres jedoch zudem ein starkes Treibhausgas darstellt:

4 NH₃ + 3 O₂ (Luft) → 2 N₂ + 6 H₂O

4 NH₃ + 4 O₂ (Luft) → 2 N₂O + 6 H₂O

Das NO im abströmenden Reaktionsgasgemisch reagiert in der Folge mit dem überschüssigen Luftsauerstoff zu NO₂:

2 NO + O₂ → 2 NO₂

Eine unerwünschte Nebenreaktion hierbei ist die Bildung von Lachgas:

2 NO + ½ O₂ → 2 N₂O

Das NO₂ reagiert wiederum in einer nachgeschalteten Absorption mit Wasser zu Salpetersäure, welche etwa der Düngemittelproduktion zugeführt wird:

3 NO₂ + H₂O → 2 HNO₃ + NO

Für die Herstellung der Edelmetallnetze werden Edelmetalldrähte aus Platin, Rhodium oder aus Legierungen dieser Metalle mit anderen Edel- oder Unedelmetallen verwendet. Typisch sind hierbei Platin-Rhodium- oder Platin-Palladium-Rhodium-Legierungen mit 88 bis 97 Gew.-% Platin. Platin ist erforderlich, um einen möglichst hohen Ammoniak-Umsatz zu erzielen, Rhodium verbessert die Selektivität zu NO, reduziert dadurch die Emission von Lachgas, und erhöht die mechanische Festigkeit [G. R. Maxwell: "Synthetic Nitrogen Products - A Practical Guide to the Products and Processes", Springer Science + Business Media, Inc. 2005, Seite 220]. Palladium wiederum wird verwendet, um, abhängig von den Edelmetallpreisen, die Edelmetallkosten durch Ersatz von Platin zu senken.

Für das Stricken von Edelmetallnetzen werden Flachstrickmaschinen verwendet. Der Aufbau der Flachstrickmaschine wird in Abbildung 2 verdeutlicht. Die Flachstrickmaschine besitzt ein vorderes (8) und ein hinteres Nadelbett (9), in welche die Zungennadeln (10) verbaut sind. Die Zungennadeln durchlaufen je nach Programmierung der Maschine unterschiedliche Stellungen. Die Programmierung gibt demnach die Struktur des Gestricks vor. Eine Besonderheit der Flachstrickmaschine gegenüber anderen gewebebildenden Maschinen ist, dass man synchron auf dem vorderen als auch auf dem hinteren Nadelbett unabhängig voneinander Gestricke bilden kann (Einbettware). Darüber hinaus können Abstandsgestricke (Zweibettware) gebildet werden, bei denen der Faden im Wechsel vorne und hinten Maschen oder Fang bildet (EP1358010 B2). Das Gestrick wird nach unten zwischen den beiden Nadelbetten abgestrickt (11). Dies geschieht durch sukzessives Abschlagen der einzelnen geformten Maschen über die Abschlagsstellung und Abschlagstegkante (12).

Gestrickte Edelmetallnetze besitzen gegenüber gewebten Edelmetallnetzen eine Reihe von Vorteilen, weswegen sie heute im industriellen Einsatz bevorzugt werden. Zum einen bietet die Stricktechnik die Möglichkeit einer hohen Flexibilität in Hinblick auf Strickmuster, verwendete Drahtstärken und resultierendes Flächengewicht. Zum anderen lassen sich die Edelmetallgestricke ökonomischer herstellen, da bei der Stricktechnik kürzere Rüstzeiten als bei der Webtechnik anfallen. Dies bedingt insbesondere eine erheblich reduzierte Edelmetallbindung in der Produktion. Zudem können auf Flachstrickmaschinen Edelmetallnetze beliebiger Länge hergestellt werden.

Im Folgenden werden die wesentlichen Begriffe definiert:
Als *Edelmetall* sollen Gold, Silber, sowie die Platinmetalle (Ru, Rh, Pd, Os, Ir, Pt) gelten.

Als *Katalysatornetze* werden die Netze bezeichnet, deren katalytische Aktivität für die Umsetzung von Ammoniak mit Sauerstoff genutzt wird.

Als *Getternetze* werden die Netze bezeichnet, die im Reaktionsgasfluß ausgangsseitig zu den Katalysatornetzen eingebaut sind, um volatiles Platinoxid zwecks Recycling durch Legierungsbildung mit dem Palladium der Getternetze einzufangen und damit den Platinverlust zu minimieren.

Als *Edelmetallnetze* wird die Gesamtheit der Katalysator- und Getternetze bezeichnet.

Als *Trennnetze* werden Netze aus hochtemperaturstabilem Stahl bezeichnet, welche zwischen den Edelmetallnetzen verbaut werden, um ein Zusammensintern der Edelmetallnetze zu verhindern.

Der *Netzstapel* besteht aus den Katalysatornetzen auf der Einlaßseite des Netzstapels, und optional den Getternetzen auf der Auslaßseite des Netzstapels, sowie den Trennnetzen, die ggf. zwischen den Edelmetallnetzen verbaut werden.

Als *Strömungsreaktor* wird der Reaktor bezeichnet, der dafür sorgt, dass das Reaktionsgas über den in ihm verbauten Netzstapel geleitet wird.

Über die *Zungennadeln* wird der Strickprozeß durchgeführt. Für jedes Maschenstäbchen eines Gestricks wird eine Zungennadel benötigt.

Nadelbett, Einbettware, Zweibettware, Polfaden: Das *Nadelbett* ist das Element der Flachstrickmaschine, über das die Zungennadeln geführt werden. Die Flachstrickmaschine verfügt üblicherweise über ein vorderes und ein hinteres Nadelbett, auf welchem jeweils ein Gestrick gestrickt werden kann (*Einbettware*). Werden diese beiden Gestricke während des Strickvorgangs über *Polfäden* zusammengestrickt, ist das neu entstehende Gestrick eine *Zweibettware.*

Ein *Henkel* entsteht durch eine Verbindung von zwei Schleifen. *Fang* ist ein Henkel, der bei einer R/R-Bindung von einem Nadelbett zum gegenüberliegenden Nadelbett eingelegt wird. Die Begriffe 'Henkel', 'Schleife' und 'R/R-Bindung' sind dem Fachmann bekannt.

Maschenreihe und -stäbchen: Die nacheinander durch den gleichen Faden gebildeten Maschen werden in ihrer Gesamtheit als *Maschenreihe* bezeichnet. Die parallel verlaufenden Maschenreihen werden durch Verschlingung der Maschen eines *Maschenstäbchens* zusammengehalten.

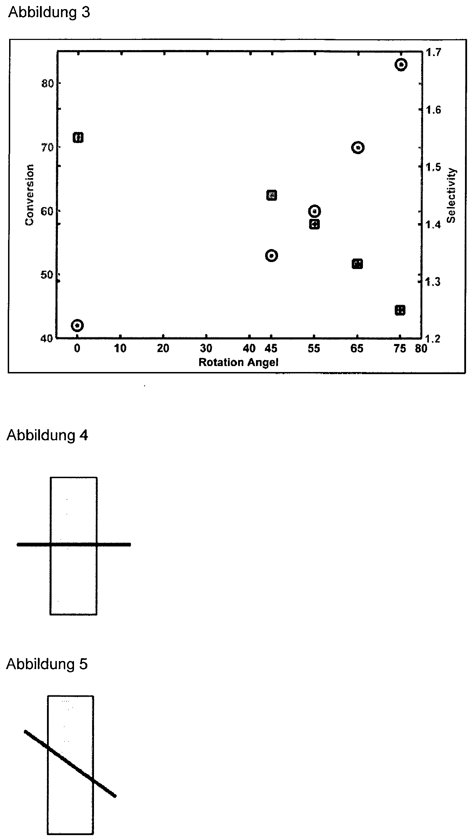

Üblicherweise werden im Strömungsreaktor (1) die Katalysatornetze (3) senkrecht zur Strömungsrichtung des Reaktionsgasgemisches eingebaut. Die Erfinder haben festgestellt, dass der Anströmwinkel, mit dem das Reaktionsgasgemisch auf den Edelmetalldraht auftrifft, einen Einfluss auf die Selektivität zu N₂O hat. Computersimulationsberechnungen bestätigten dies. Abbildung 3 zeigt die Computersimulation der Ammoniakoxidation über einen Edelmetalldraht (angenommene Zusammensetzung PtRh5) unterschiedlicher Ausrichtung bei konstanter Breite des durchströmten Bereiches. Dabei ist auf der Abszissenachse die Abweichung von der senkrechten Anströmung des Drahtes als Winkel α dargestellt. Ein Winkel α von 0° entspricht somit einem Draht innerhalb der Ebene senkrecht zur Strömungsrichtung des Reaktionsgases (Abbildung 4) entsprechend der Ausrichtung der Katalysatornetze (3) im Strömungsreaktor (1). Abbildung 5 zeigt einen Draht, der im Winkel α = 35° gekippt in der Reaktionszone vorliegt. Auf der linken Ordinatenachse ist der Ammoniakumsatz (Symbol: Kreise), und auf der rechten Ordinatenachse die Selektivität zu N₂O (Symbol: Quadrate) aufgetragen. Wie zu erkennen ist, nimmt mit zunehmendem Winkel α der Ammoniakumsatz zu und die Selektivität zu N₂O ab. Je schräger der Draht angeströmt wird, desto höher sind der Umsatz von Ammoniak und desto geringer ist die Selektivität für die Oxidation von Ammoniak zu N₂O. Der zunehmende Ammoniakumsatz ist mit der längeren Drahtlänge und damit größeren Oberfläche innerhalb des durchströmten Bereiches zu begründen. Die geringere Selektivität für die Oxidation von Ammoniak zu N₂O ist jedoch überraschend.

Der vorliegenden Erfindung lag daher die Aufgabenstellung zugrunde, ein Verfahren zu entwickeln, mit dem sich ein Edelmetallnetz herstellen lässt, welches aufgrund seiner Struktur eine höhere Selektivität für die Oxidation von Ammoniak zu NO aufweist.

Die Aufgabe wurde gelöst durch ein Verfahren zur Herstellung von Edelmetallnetzen auf Flachstrickmaschinen, die Schritte enthaltend
- Bereitstellen von Edelmetalldraht, Platin umfassend
- Bereitstellen von brennbarem oder in Lösungsmittel löslichem Garn
- Stricken von Zweibettware durch simultanes Stricken auf dem vorderen und hinteren Nadelbett und Zusammenführen der beiden Gestricke durch verbindende Polfäden
dadurch gekennzeichnet, dass auf dem vorderen oder auf dem hinteren Nadelbett ein brennbares oder lösliches Garn verwendet wird, welches nach dem Strickvorgang abgeflammt oder aufgelöst wird, und auf dem anderen Nadelbett und für die Polfäden ein Edelmetalldraht verwendet wird, so dass nach dem Abflammen oder Auflösen des brennbaren oder löslichen Garns nur der Polfaden oder die Polfäden und das auf dem hinteren oder vorderen Nadelbett hergestellte Gestrick aus Edelmetalldraht übrig bleiben.

Durch die Entfernung des Gestricks, welches auf dem hinteren oder vorderen Nadelbett hergestellt wurde, entsteht ein Edelmetallnetz mit von der Netzebene abstehenden Schlaufen. Durch den Edelmetalldrahtanteil in den Schlaufen wird, wie bereits beschrieben, die Selektivität für die Oxidation von Ammoniak zu N₂O verringert.

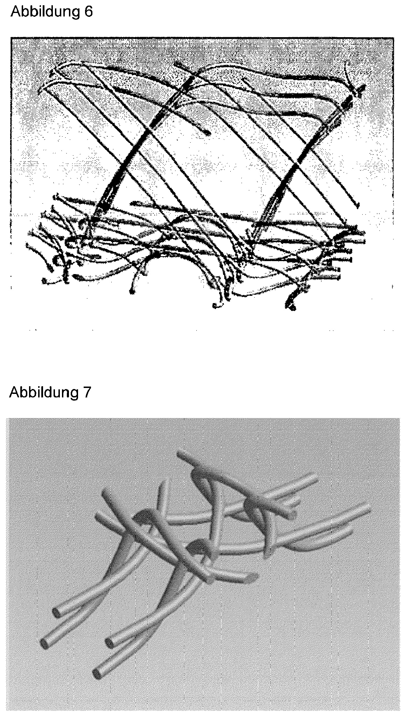

Durch das Merkmal der abstehenden Schlaufen ist auch nach Abschluss der Herstellung das erfindungsgemäße Edelmetallnetz von einem Edelmetallnetz entsprechend dem Stand der Technik zu unterscheiden. Abbildung 6 zeigt ein erfindungsgemäßes Edelmetallnetz, Abbildung 7 ein Edelmetallnetz als Einbettware entsprechend dem Stand der Technik. Deutlich sind die abstehenden Schlaufen des erfindungsgemäßen Edelmetallnetzes zu erkennen, während sie bei dem Edelmetallnetz als Einbettware entsprechend dem Stand der Technik fehlen.

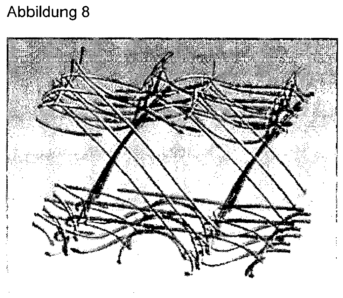

Abbildung 8 zeigt ein Edelmetallnetz als Zweibettware entsprechend dem Stand der Technik. Da in diesem Fall sowohl das auf dem vorderen als auch das auf dem hinteren Nadelbett gefertigte Gestrick vorhanden sind, sie hier ebenfalls keine abstehenden Schlaufen zu erkennen. Somit unterscheidet sich das erfindungsgemäße Edelmetallnetz auch deutlich von diesem Edelmetallnetz des Standes der Technik. Auch hier ist der Anteil an Edelmetalldraht, welcher nicht innerhalb der Edelmetallnetzebene verläuft, bei dem erfindungsgemäßen Edelmetallnetz deutlich größer als bei der Zweibettware entsprechend dem Stand der Technik.

Bei Verwendung eines löslichen Garns ist dieses bevorzugt in Wasser löslich. Wasser als Lösungsmittel ist organischen Lösungsmitteln sowohl aus Umweltschutz- als auch aus Arbeitssicherheitsgründen vorzuziehen.

Bevorzugt besteht der Edelmetalldraht aus einer Legierung umfassend Platin und Rhodium. Durch das Platin wird eine gute katalytische Aktivität für den Ammoniak-Umsatz erzielt, Rhodium verbessert die Selektivität zu NO und reduziert damit die Lachgas-Emissionen.

Der Polfaden oder die Polfäden und das auf dem hinteren oder vorderen Nadelbett hergestellte Gestrick aus Edelmetalldraht bestehen bevorzugt aus Edelmetalldraht der gleichen Zusammensetzung und des gleichen Durchmessers. Hierdurch wird die Komplexität der Fertigung reduziert.

In einer besonderen Ausführungsform wird für den Polfaden oder die Polfäden ein Edelmetalldraht mit größerem Durchmesser verwendet als für das auf dem hinteren oder vorderen Nadelbett hergestellte Gestrick. Hierdurch lässt sich die Lachgasbildung zusätzlich reduzieren, ohne den Edelmetallgehalt zu sehr zu erhöhen, da dickere Edelmetalldrähte die Selektivität zu NO erhöhen ("The Kinetics of Industrial Ammonia Combustion", Maximilian Warner, PhD-Thesis, Univ. of Sydney, 2013).

Ebenfalls umfasst die Erfindung ein Edelmetallnetz, welches nach dem erfindungsgemäßen Verfahren hergestellt ist. Bevorzugt besteht der Edelmetalldraht oder die Edelmetalldrähte aus einer Platinlegierung mit mehr als 75 Gewichts-% Platin.

Weiterhin ist ein Verfahren zur katalytischen Oxidation von Ammoniak Bestandteil der Erfindung, welches die Schritte
- Bereitstellen von einem oder mehreren erfindungsgemäßen Edelmetallnetzen
- Zusammenfassen der Edelmetallnetze und gegebenenfalls von Getter- und Trennnetzen zu einem Netzstapel (3)
- Einbau des Netzstapels (3) in einen Strömungsreaktor (1)
- Zuführung eines Gases (6) beinhaltend Ammoniak und Sauerstoff bei einer Temperatur im Strömungsreaktor (1) zwischen 500°C und 1300°C und einem Druck zwischen 0,1 MPa und 1,4 MPa, wobei das Ammoniak katalytisch mit dem Sauerstoff reagiert und NO erhalten wird, welches für die Salpetersäureherstellung verwendet werden kann.

Bevorzugt werden die Netze derart eingebaut, dass die von der Netzebene abstehenden Schlaufen, die von dem Polfaden oder den Polfäden gebildet werden, dem Gasstrom zugewandt sind, so dass das Reaktionsgas zu allererst auf die Polfäden trifft. Damit kann das Reaktionsgas auf der Oberfläche der Polfäden bereits reagieren, bevor es auf die Oberfläche des auf dem hinteren oder vorderen Nadelbett hergestellten Gestricks trifft, welches eine höhere Selektivität für die Oxidation von Ammoniak zu N₂O aufweist als die Schlaufen.

## Patentansprüche

1. Verfahren zur Herstellung von Edelmetallnetzen auf Flachstrickmaschinen, die Schritte enthaltend
a. Bereitstellen von Edelmetalldraht, Platin umfassend
b. Bereitstellen von brennbarem oder in Lösungsmittel löslichem Garn
c. Stricken von Zweibettware durch simultanes Stricken auf dem vorderen und hinteren Nadelbett und Zusammenführen der beiden Gestricke durch verbindende Polfäden
**dadurch gekennzeichnet, dass** auf dem vorderen oder auf dem hinteren Nadelbett ein brennbares oder lösliches Garn verwendet wird, welches nach dem Strickvorgang abgeflammt oder aufgelöst wird, und auf dem anderen Nadelbett und für die Polfäden ein Edelmetalldraht verwendet wird, so dass nach dem Abflammen oder Auflösen des brennbaren oder löslichen Garns nur der Polfaden oder die Polfäden und das auf dem hinteren oder vorderen Nadelbett hergestellte Gestrick aus Edelmetalldraht übrig bleiben.

2. Verfahren nach Anspruch 1, **dadurch gekennzeichnet, dass** es sich bei dem in Lösungsmittel löslichem Garn um in Wasser lösliches Garn handelt.

3. Verfahren nach Anspruch 1 oder 2, **dadurch gekennzeichnet, dass** der Edelmetalldraht aus einer Legierung besteht, die Platin und Rhodium umfasst.

4. Verfahren nach einem oder mehreren der Ansprüche 1 bis 3, **dadurch gekennzeichnet, dass** der Polfaden oder die Polfäden und das auf dem hinteren oder vorderen Nadelbett hergestellte Gestrick aus Edelmetalldraht der gleichen Zusammensetzung und des gleichen Durchmessers bestehen

5. Verfahren nach einem oder mehreren der Ansprüche 1 bis 3, **dadurch gekennzeichnet, dass** der Polfaden oder die Polfäden einen größeren Drahtdurchmesser aufweist bzw. aufweisen als der Edelmetalldraht bzw. die Edelmetalldrähte des auf dem hinteren oder vorderen Nadelbett hergestellten Gestricks

6. Edelmetallnetz, **dadurch gekennzeichnet, dass** es nach einem Verfahren gemäß einem oder mehreren der Ansprüche 1 bis 5 hergestellt ist

7. Edelmetallnetz nach Anspruch 6, **dadurch gekennzeichnet dass** der Edelmetalldraht oder die Edelmetalldrähte des Edelmetallnetzes aus einer Platinlegierung mit mindestens 75% Platin bestehen.

8. Verfahren zur katalytischen Oxidation von Ammoniak, die Schritte enthaltend
a. Bereitstellen von Edelmetallnetzen gemäß Anspruch 6 oder 7 oder erhältlich nach einem oder mehreren der Ansprüche 1 bis 5
b. Zusammenfassen der Edelmetallnetze und gegebenenfalls von Getternetzen und Trennnetzen zu einem Netzstapel (3)
c. Einbau des Netzstapels (3) in einen Strömungsreaktor (1)
d. Zuführung eines Gases (6) beinhaltend Ammoniak und Sauerstoff bei einer Temperatur im Strömungsreaktor (1) zwischen 500°C und 1300°C und einem Druck zwischen 0,1 MPa und 1,4 MPa

9. Verfahren nach Anspruch 8, **dadurch gekennzeichnet, dass** das erfindungsgemäße Edelmetallnetz oder die erfindungsgemäßen Edelmetallnetze derart eingebaut sind, dass die von der Netzebene abstehenden Schlaufen, die von dem Polfaden oder den Polfäden gebildet werden, dem Gasstrom des Reaktionsgases zugewandt sind.
